# EUROPEAN PATENT SPECIFICATION

(11) **EP 3 620 321 B1**
(45) Date of publication and mention of the grant of the patent: **12.04.2023**
(21) Application number: 18193097.5
(22) Date of filing: 07.09.2018
(51) Int. Cl.: B60L 3/00, B60L 58/20

(54) **POWER SUPPLY SYSTEM**
STROMVERSORGUNGSSYSTEM
SYSTÈME D'ALIMENTATION ÉLECTRIQUE

(43) Date of publication of application: 11.03.2020
(73) Proprietor: Samsung SDI Co., Ltd., Gyeonggi-do 17084 (KR)
(72) Inventor: Erhart, Michael, 8054 Seiersberg-Pirka (AT)
(74) Representative: Gulde & Partner

(56) References cited:
- EP-A1- 3 293 036
- EP-A1- 3 360 719
- EP-A2- 2 587 618
- US-A1- 2008 191 663
- US-A1- 2015 298 631
- US-B1- 6 323 608

## Description

### Field of the Invention

The present invention relates to a power supply system, particularly to a power supply battery system for an electric vehicle comprising a 48 V board net and a 12 V board net with redundant power supply for the 12 V board net. The power supply system of the present invention thus provides a limp home functionality for an electric vehicle.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle. One or more battery modules are mechanically and electrically integrated, equipped with a thermal management system and set up for communication with one or more electrical consumers in order to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters a battery system usually comprises a battery management unit (BMU) and/or a battery management system (BMS). Such control units may be an integral part of the battery system and disposed within a common housing or may be part of a remote control unit communicating with the battery system via a suitable communication bus. In both cases, the control unit communicates with the electrical consumers via a suitable communication bus, e.g. a CAN or SPI interface.

The electric engine of electric vehicles may be supplied by a high voltage battery system, e.g. a 48 V battery system. The 48 V battery system is connected to a 48 V board net that may comprise electronic control units (ECUs) powered by the 48 V battery system. The 48 V battery system is usually charged by a electric generator (combined starter generator), which is therefore also a part of the high voltage board net. The electric vehicles may further comprise a 12 V board net that might be related to security relevant functions. Exemplarily, an ECU of a power steering system or an ECU of an antiskid system may be integrated in the 12 V board net. The 12 V board net may comprise a 12 V battery system, e.g. a lead-acid based 12 V battery, that may be charged by the 48 V board net via a DC/DC converter.

In order to guarantee the security relevant functions supplied by the 12 V board net, the DC/DC converter interconnected between the 48 V battery and the 12 V battery may provide an operating voltage to the 12 V board net in case of failure of the 12 V battery. However, the DC/DC converter acting as redundant power supply has to be designed to fulfil high functional safety standards, such as e.g. ISO26262. In order to meet these safety measures, the complexity and thus the costs for the DC/DC converter have to be increased drastically.

EP 2587618 A2 discloses a car power source apparatus and vehicle equipped with the power source apparatus. US 6323608 B1 discloses a dual voltage battery for a motor vehicle. EP 3360719 A1 discloses a dual power supply system for a vehicle.

It is thus an object of the present invention to provide an alternative power supply system, particularly for an electric vehicle, for supplying different operating voltages, particularly for supplying two different board nets of an electric vehicle. Therein, the production costs, weight and installation space requirements of the power supply system shall be decreased compared to the prior art. Further, any security relevant function related to at least one of the board nets of the electric vehicle shall be guaranteed in a redundant manner.

### Summary of Invention

One or more of the drawbacks of the prior art could be avoided or at least reduced by means of the present invention, according to which a power supply system for an electric vehicle is provided that comprises a plurality of stacked battery cells that are interconnected between a first stack node and a second stack node and that are configured to provide a first operation voltage for supplying a high voltage board net of the electric vehicle. In other words, the high voltage board net spans between the first and the second stack node. The plurality of stacked battery cells may further comprise battery cells connected in parallel between the first terminal and the second terminal. Exemplarily, a plurality of submodules, each comprising a plurality of cells connected in parallel, may be connected in series between the first and second stack node. In other words, the added voltage of all battery cells connected in series between the first and second stack node applies between the first stack node and the second stack node. Preferably, a voltage between 36 V and 52 V, particularly preferred of 48 V, applies between the first stack node and the second stack node of the power supply system.

The power supply system further comprises a low voltage battery that is interconnected between the second stack node and a low voltage node and is configured to output a second operation voltage for supplying a low voltage board net of the electric vehicle. The low voltage battery may be a Nickel Cadmium battery or a lead accumulator and/or may supply a 12 V board net of the electric vehicle. Hence, the low voltage battery may supply an operation voltage of 12 V. In the power supply system of the invention, the low voltage board net spans between the second stack node and the low voltage node. However, in principal the low voltage board net could also span between the first stack node and the low voltage node. Preferably, the second stack node is connected to ground, i.e. is the low voltage node of the stacked battery cells.

In the power supply system of the invention, further a step-down converter is interconnected between the first stack node and the second stack node and is configured to output a third operation voltage to the low voltage node for charging the low voltage battery. In other words, the step-down converter receives the voltage output by the plurality of stacked battery cells and outputs a reduced voltage thereof to the low voltage node. Hence, by operation of the DC/DC step-down converter, additionally the low voltage board net can be supplied.

Preferably, the DC/DC converter is one of a buck converter, a forward converter, and a flyback converter. Particularly preferred, the converter is one of a full bridge converter, a buck-boost converter and a push-pull converter. Essentially, the DC/DC converter is configured for converting the first voltage (input voltage) to the third voltage (output voltage).

The power supply system of the present invention further comprises a an intermediate node dividing the plurality of stacked battery cells in a first subset of battery cells (first sub-stack) and a second subset of battery cells (second sub-stack). In other words, the added voltage of all battery cells connected in series between the first stack node and the intermediate node applies between the first stack node and the intermediate node and the added voltage of all battery cells connected in series between the intermediate node and the second stack node applies between the intermediate node and the second stack node. The first subset and the second subset of battery cells may comprise the same amount or different amounts of stacked battery cells connected in series between the respective nodes. Further, the nominal output voltages of the first and second subset of battery cells may be the same or different. Further, the battery cells of the first sub-stack may have a different capacity than the battery cells of the second sub-stack. According to the present invention, the intermediate node is connected to the low voltage node via a first switching element and a conductive path between the intermediate node and the low voltage node is set to be either opened or closed.

The power supply system of the present invention further comprises a control unit that is configured to detect the terminal voltage of the low voltage battery and to set the first switching element conductive depending on the detected terminal voltage. Preferably, the control unit is configured to set the first switching element either conductive or non-conductive based on the terminal voltage of the low voltage battery. The control unit may be integrated in a control unit of the battery system of the stacked battery cells, the low voltage battery or in an electric vehicle comprising the power supply system of the invention. The control unit may also be an individual component of the power supply system.

The power supply system of the invention can advantageously supply a high voltage board net and a low voltage board net of an electric vehicle. By supporting the low voltage board net via a high voltage battery stack and a step-down converter, via a low voltage battery or via a second sub-stack of the high voltage battery stack, an improved redundancy in supplying the security relevant low-voltage board net is achieved. Therein, controlling the conductivity of the first switching element based on the terminal voltage of the low voltage battery allows for freely setting the voltage provided between the intermediate node and the second stack node and to the low voltage board net via the low voltage node. Hence, an electric vehicle comprising the power supply system of the invention can be brought into a safe state in reaction to a malfunction or degradation of the low voltage battery without an interruption of the safety relevant 12 V board and can thus "limp home". Further, in the power supply system of the invention, the DC/DC step down converter is not safety critical anymore and no additional measures and costs have to be considered for the step-down converter. Further, no additional costs arise with respect to the high voltage battery stack, which can be exemplarily a stock 48 V battery system without further modification for 12 V safety supply.

In a preferred embodiment of the power supply system of the invention, the third operation voltage is less or equal than the second operation voltage. In other words, the voltage supplied by the step-down converter to the low-voltage board net is less or equal, particularly preferred equal, to the voltage supplied by the low voltage battery. Further preferred, a fourth operation voltage provided by the second subset of battery cells is in between the second operation voltage and the third operation voltage. In other words, the fourth operation voltage preferably exceeds the third operation voltage without exceeding the second operation voltage. Particularly preferred, the second, third and fourth operation voltages are equal. Hence, the performance of the low voltage board net is guaranteed without any compromise.

The control unit is configured to set the first switching element conductive if the detected terminal voltage is less than a first predetermined voltage threshold. Therein, the first predetermined voltage threshold may be less or equal than the second operation voltage. Preferably, the first predetermined voltage threshold is in between 50% and 100% of the second operation voltage, preferably in between 60% and 95%, 70% and 90%, or 80% and 85% of the second operation voltage. Thus, a malfunction or degradation of the low voltage battery is safely recognized and can be distinguished from mere voltage variations. Further, the control unit is configured to set the first switching element non-conductive if the detected terminal voltage is more than a second predetermined voltage threshold. Thus, the normal operation of the power supply system is presumed, if the low voltage battery is again sufficiently charged. In the normal operation of the power supply system, the low voltage board net is either supplied by the low voltage battery or the step-down converter. The second predetermined voltage threshold is above the first predetermined voltage threshold.

According to a further preferred embodiment, the first predetermined voltage threshold is lower than at least one of the second to fourth operation voltage. Particularly preferred, the first predetermined voltage threshold is lower than each of the of the second to fourth operation voltages. In this embodiment, at least some and preferably all of the operation voltages are not limited by the choice of the first predetermined voltage threshold. This is achieved by controlling the first switching element solely in dependence of the terminal voltage of the low voltage battery cell and not the voltage in the low or high voltage board net.

In a further preferred embodiment of the power supply system, the step-down converter comprises a first input node that is connected to the first stack node and a second input node that is connected to the second stack node. In other words, the first input node is at the same electric potential as the first stack node and the second input node is at the same electric potential as the second stack node. A second switching element and an energy storage element are connected in series between the first input node and the low voltage node. Preferably, the second switching element is interconnected between the first input node and the energy storage element. Further, a third switching element is interconnected between the second input node and a first converter node, wherein the first converter node is electrically connected between the second switching element and the energy storage element. In other words, the step-down converter preferably is a buck converter, particularly if an inductance is used as an energy storage element. However, also a capacitor can be used as an energy storage element and hence in the context of the present application also a charge pump may be used as a step-down converter. However, as lower power losses may occur with an inductance as energy storage element, the use of an inductance is particularly preferred.

Further preferred, the step-down converter comprises a rectifying element interconnected between the energy storage element and the low voltage node, wherein the rectifying element is configured to suppress a current from the low voltage node to the step-down converter. The rectifying element advantageously allows for suppressing cross-talk from the low voltage board net to the high voltage board net. Particularly preferred, the rectifying element is a diode and by such passive element switching noise is advantageously reduced.

According to a further preferred embodiment, the step-down converter is further configured to output the third operation voltage to the intermediate node for transferring energy from the first subset of battery cells to the second subset of battery cells. This configuration allows for balancing the first subset and the second subset of battery cells. Therein, a voltage that exceeds the voltage applied to the intermediate node is applied to the step-down converter's output. Thus, a current flows into the intermediate node and thus the first subset of battery cells becomes less discharged or even charged. Hence, even though the control unit is exclusively supplied by the first subset of battery cells if the first switching element is set conductive no persistent misbalance between the first and second subset of cells is caused.

For providing the energy transfer from the first sub-stack to the second sub-stack, the step-down converter preferably comprises a second converter node that is electrically connected between the low voltage node and the energy storage element and a fourth switching element that is electrically connected between the second converter node and the intermediate node. Hence, by setting the fourth switching element conductive, the second converter node is electrically connected to the intermediate node. Further preferred, the step-down converter comprises a fifth switching element that is electrically connected between the second converter node and the low voltage node. Thus, the low voltage board net can be disconnected from the step-down converter, while the converter is used for stack balancing. In this embodiment, the step-down converter preferably comprises a further rectifying element interconnected between the intermediate node and the second converter node and configured for suppressing a current from the intermediate node to the step-down converter.

According to this preferred embodiment, the power supply system can be operated in a first operation mode, wherein the high voltage board net is operated by the stacked battery cells and the low voltage board net is operated by the low voltage battery and/or the step-down converter. In the first operation mode, the low voltage battery may be charged by the step-down converter. Further, the power supply system can be operated in a second operation mode, wherein the high voltage board net is operated by the stacked battery cells and the low voltage board net is operated by the second sub-stack via the conductive first switching element. Further, the power supply system can be operated in a third operation mode, wherein the step-down converter is used for balancing the first and second sub-stack and/or charging the low voltage battery. Therein, the third operation mode may be performed in an idle state of an electric vehicle comprising the power supply system. Further, in a fourth operation mode, charging of the low-voltage battery via the step-down converter occurs, while the low voltage board net is operated by the second sub-stack via the conductive first switching element. In this case, the low voltage battery is preferably interconnected between the second stack node and the second converter node. Further, the first rectifying element is interconnected between the low voltage node and the low voltage battery and configured for suppressing a current from the low voltage board net to the low voltage battery. According to this embodiment, the low voltage board net is operable via the second sub-stack if the low voltage battery is discharged, e.g., during winter, while the low voltage battery is charged.

In order to operate the power supply system in one of these operation states, the control unit preferably is further configured to control the conductivity of at least one, preferably all, of the second to fifth switching element. In order to simplify the operation of the switching elements, a first pair of complementary transistors may be used for the second and third switching element and/or a second pair of complementary transistors may be is used for the fourth and fifth switching element. As the conductivity states of the second and third switching element should be complementary, using complementary transistors allow setting these conductivity states with a single control signal. Similarly, as the conductivity states of the fourth and fifth switching element could be complementary using complementary transistors also allow setting these conductivity states with a single control signal. Further preferred, the first and second rectifying elements are realized by switching elements. Particularly, the first and second rectifying element is provided by the fourth and fifth switching element, respectively. Further preferred, the control unit of the power supply system is configured for setting the duty cycle of at least one switching element for performing the balancing of the sub-stacks.

Another aspect of the present invention is directed to a vehicle comprising a power supply system according to the invention, as described above, and further comprising at least one first load that is interconnected between the first stack node and the second stack node and at least one second load that is interconnected between the second stack node and the low voltage node. Alternatively, the vehicle comprises a power supply system according to the invention, as described above, and further comprises a starter generator that is interconnected between the first stack node and the second stack node. Particularly preferred, the first load has an operation voltage of about 48 V and the second load has an operation voltage of about 12 V.

Another aspect of the present invention relates to a method for operating a power supply system according to the invention that is part of a vehicle according to the invention as described above. According to the method of the invention, the power supply system is operated in one of a first, second, third or fourth operation mode. Therein, in the first operation mode, the high voltage board net is operated by the stacked battery cells and the low voltage board net is operated by the low voltage battery and/or the step-down converter. In the first operation mode, the low voltage battery may be charged by the step-down converter. In the second operation mode, the high voltage board net is operated by the stacked battery cells and the low voltage board net is operated by the second sub-stack via the conductive first switching element. In the third operation mode, the step-down converter is used for balancing the first and second sub-stack and/or charging the low voltage battery. Therein, the third operation mode may be performed in an idle state of an electric vehicle comprising the power supply system. In the fourth operation mode, charging of the low-voltage battery via the step-down converter occurs, while the low voltage board net is operated by the second sub-stack via the conductive first switching element. Then, the low voltage board net is operable via the second sub-stack if the low voltage battery is discharged, e.g. during winter, while the low voltage battery is charged for later supply.

Further aspects of the present invention are disclosed in the dependent claims or the following description of the drawings.

### Brief Description of the Drawings

Features will become apparent to those of ordinary skill in the art by describing in detail exemplary embodiments with reference to the attached drawings in which:
- Fig. 1: schematically illustrates a prior art dual power supply system of an electric vehicle;
- Fig. 2: schematically illustrates a circuit diagram of a vehicle according to the invention with a power supply system according to a first embodiment of the invention;
- Fig. 3: schematically illustrates a circuit diagram of a vehicle according to the invention with a power supply system according to a second embodiment of the invention;
- Fig. 4: schematically illustrates a circuit diagram of a vehicle according to the invention with a power supply system according to a third embodiment of the invention;
- Fig. 5: schematically illustrates a circuit diagram of a vehicle according to the invention with a power supply system according to a fourth embodiment of the invention; and
- Fig. 6: schematically illustrates a circuit diagram of a vehicle with a power supply system according to an illustrative example not part of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings, wherein like reference numerals denote like elements, and redundant descriptions are omitted. Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise. It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. Expressions such as "at least one of," when preceding a list of elements, modify the entire list of elements and do not modify the individual elements thereof.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

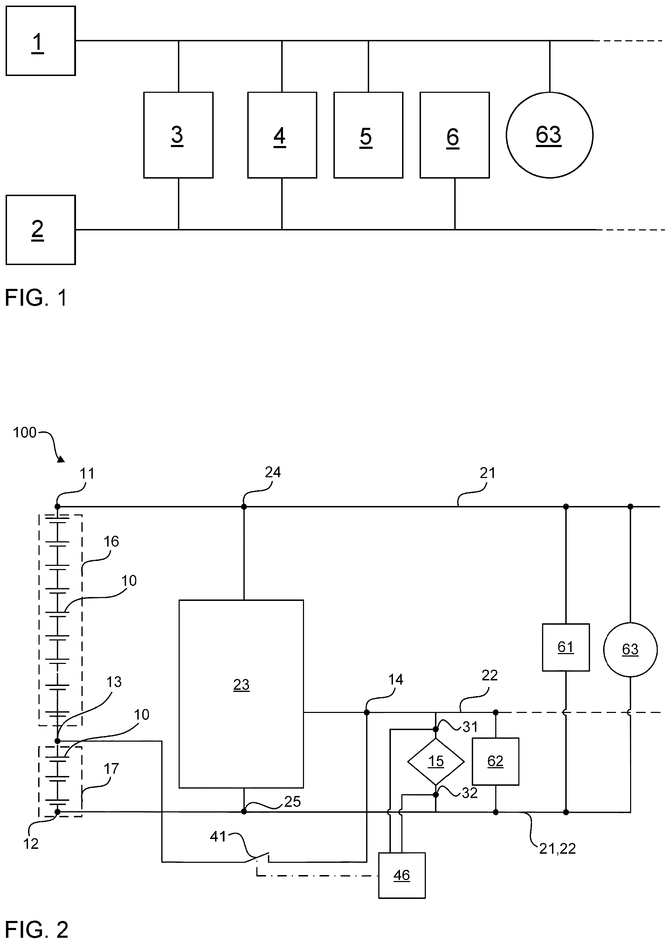

Figure 1 schematically illustrates a power supply system of an electric vehicle according to the prior art. The power supply system according to the prior art comprises a 48 V battery system 1 and an additional 12 V battery system 2 that is external to the 48 V battery system 1. The 48 V battery system 1 is charged by a starter generator 7 and the 12 V battery system 2 is charged by the 48 V battery system 1 via an additional DC/DC converter 3 that is external to the battery systems 1, 2. The 48 V battery system 1 is connected via a 48 V board net to 48 V supplied loads, e.g. to 48 V supplied ECU 5, and the 12 V battery system 2 is connected to 12 V supplied loads, e.g. to 12 V supplied ECU 6. A voltage variable load, e.g. a voltage variable ECU 4 with internal DC/DC converter, may be connected to the 48 V battery system 1 and the 12 V battery system 2. The dual power supply system according to the prior art comprises separate 48 V battery system, 12 V battery system and DC/DC converter and hence requires a lot of installation space, is heavy and high in production costs.

Figure 2 schematically illustrates a circuit diagram of an electric vehicle with power supply system 100 according to a first embodiment of the present invention.

Therein, the power supply system 100 comprises a plurality of stacked battery cells 10 forming a high voltage battery stack that is interconnected between a first stack node 11 and a second stack node 12. The power supply system 100 further comprises an intermediate node 13 and the stacked battery cells 10 are divided in a first cell sub-stack 16 between the first stack node 11 and the intermediate node 13 and a second cell sub-stack between the intermediate node 13 and the second stack node 12. Each of the first and second battery sub-stack 16,17 comprises a plurality of battery cells 10 connected in series. In detail, the first cell sub-stack 16 comprises nine battery cells 10, each with a capacity of about 4V, and the second cell sub-stack 17 comprises four battery cells 10, each with a capacity of about 4 V. The stacked battery cells 10 as a whole provide a voltage of about 48V that applies between the first and second stack node 11, 12 and the second sub-stack 17 provides a voltage of about 12V that applies between the intermediate node 13 and the second stack node 12.

The first stack node 11 is on the added potential of the battery cells 10 connected in series between the first stack node 11 and second stack node 12, while the second terminal 12 is on ground potential. The first stack node 11 is electrically connected with a first electric line shown as upper limitation of the power supply system 100 and the second stack node 12 is electrically connected with a second electric line shown as lower limitation of the power supply system 100. These upper and lower lines form a high voltage board net 21 that spans between the first and second stack nodes 11, 12. A starter generator 63 and a first load 61, e.g. a 48V high voltage electronic control unit ECU, are connected to the high voltage board net, i.e. interconnected between the first and second stack node 11, 12.

The power supply system 100 further comprises a DC/DC converter 23 connected in parallel to the stacked battery cells 10 between the first stack node 11 and the second stack node 12. Particularly, a first input node 24 of the step-down converter 23 is connected to the first stack node 11 and a second input node 25 of the step-down converter 23 is connected to the second stack node 12. The step-down converter 23 thus receives the voltage provided by the stacked battery cells 10, i.e. approximately 48V, as an input voltage. The step-down converter 23 is configured to output a reduced voltage via a low voltage node 14.

The power supply system 100 further comprises a low voltage board net 22 that spans between the second stack node 12 and the low voltage node 14. A low voltage battery 15 is part of the low voltage board net 22 and is interconnected between the second stack node 12 and the low voltage node 14. The low voltage battery 15 is a lead accumulator configured to output a second operation voltage of approximately 12 V for supplying the low voltage board net 22. Further, a second load 62, e.g. a 12V high voltage electronic control unit ECU, is connected to the high voltage board net 21, i.e. interconnected between the second stack node 12 and the low voltage node 14. The electric lines forming the high voltage board net 21 and the low voltage board net 22 are electrical conductors, e.g. wires, or conducting elements on a circuit carrier, e.g. metallizations or conducting polymers on a PCB.

The power supply system 100 further comprises a control unit 46 that is configured to detect the terminal voltage of the low voltage battery 15. Therefore, the control unit 46 is electrically connected to a first voltage measurement node 31 at a first terminal of the low voltage battery 15 and to a second voltage measurement node 32 at a second terminal of the low voltage battery 15. The control unit 46 thus receives the voltage of the low voltage battery 15 as an input. The control unit 46 is further configured to control the conductivity of a first switching element 41 that is interconnected between the intermediate node 13 and the low voltage node 14. The control unit 46 is configured to set the conductivity of the first switching element 41 based on the detected terminal voltage of the low voltage battery 15. Particularly, if the terminal voltage of the low voltage battery 15 drops below a first predetermined voltage threshold, the control unit 46 sets the first switching element 41 conductive.

Hence, in case of a cell failure of the low voltage battery 15, the low voltage battery 15 may fail to supply the second load 62 that might be a security relevant load. Although the step-down converter 23 could principally supply the low voltage board net 22, relying solely on the converter 23 would require strict safety measures to be fulfilled by the converter 23. Hence, in the power supply system 100 of Figure 2, the low voltage board net 22 is supplied by the second sub-stack 17, i.e. with a fourth operation voltage of approximately 12V.

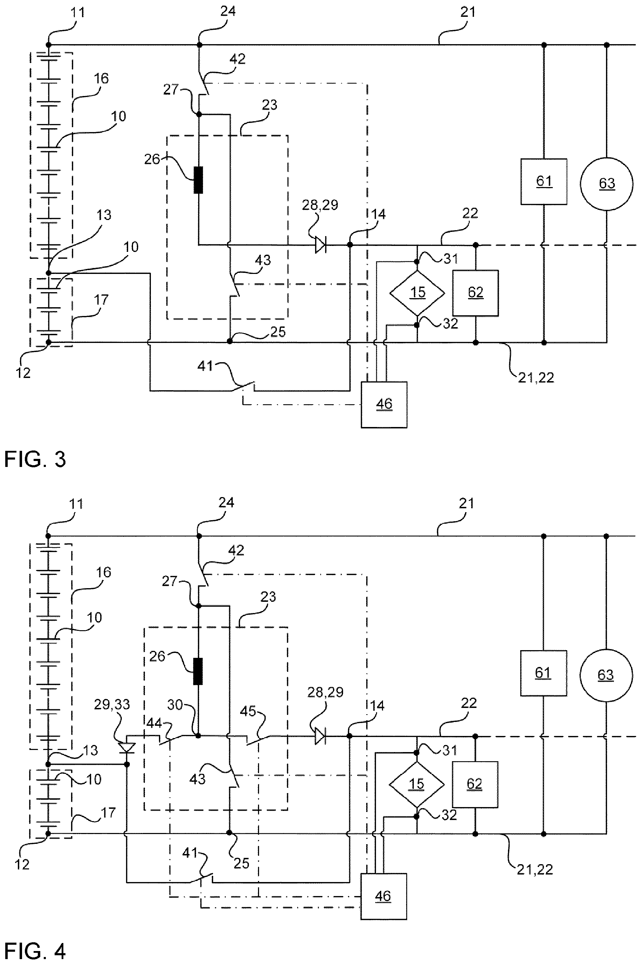

Figure 3 schematically illustrates a circuit diagram of a power supply system 100 according to a second embodiment of the present invention. A description thereof is omitted where it equals the power supply system as illustrated in Figure 2.

In Figure 3, the step-down converter 23 is specified to be a buck converter 23 that is connected in parallel with the plurality of battery cells 10 between the first stack node 11 and the second stack node 12. A first input node 24 of the buck converter 23 is electrically connected with the first stack node 11 and a second input node 25 of the buck converter 23 is electrically connected with the second stack node 12. The buck converter 23 comprises a second switching element 42 and an inductance 26 as energy storage element electrically connected in series between the first input node 24 and an output 31 of the buck converter 23, particularly between the second input node 24 and the low voltage node 14. The buck converter 23 further comprises a third switching element 43 interconnected between the second input node 25 and a first converter node 27, wherein the first converter node 27 is interconnected between the second switching element 42 and the energy storage inductance 26. Principally, also a rectifying element, e.g. a diode could be used instead of the third switching element 43. The first to third switching elements 41, 42, 43 are controlled by the control unit 46 as indicated by the dashed-dotted lines shown in Figures 2 and 3. Further, a rectifying element 28 in form of a diode 28 is interconnected between the low voltage node 14 and the energy storage element 26 in order to suppress a current towards the energy storage element 26, while the low voltage board net 22 is supplied by second sub-stack 17.

During a first operation mode of the power supply systems 100 of Figures 2 and 3, the low voltage board net 22 is supplied via the low voltage battery 15 and the step-down converter 23. Therein, the output voltage of the buck converter 23 of Figure 3 is controlled by setting the duty cycles of the second and third switching elements 42, 43 via the control unit 46. In a second operation mode, the first switching element 41 is set conductive by the control unit 46 and the low voltage board net 22 is supplied by the second sub-stack 17.

Figure 4 schematically illustrates a circuit diagram of a power supply system 100 according to a third embodiment of the present invention. A description thereof is omitted where it equals the power supply system 100 as illustrated in Figures 2 or 3. In Figure 4, a second converter node 30 of the step-down converter 23 is electrically connected to the intermediate node 13 via a fourth switching element 44 and a diode 33 as a second rectifying element 29. Further, a fifth switching element 45 is interconnected between the first rectifying diode 28, 29 and the second converter node 30. Therein, the fourth and fifth switching elements 44, 45 are also controlled by the control unit 46. The power supply system 100 of Figure 4 thus allows for a third operation mode, wherein the step-down converter 23 is used for balancing the first and second sub-stacks 16, 17 and for charging the low voltage battery 15. Therein, for balancing the battery sub-stacks 16, 17 the fourth switching element 44 is set conductive and the fifth switching element 45 is set non-conductive. Then, the output voltage of the converter 23 at the second converter node 30 is set via the duty cycle of the second and third switching elements 42, 43. For charging the low voltage battery 15 the fifth switching element 45 is set conductive and the fourth switching element 44 is set non-conductive. Alternatively, charging and balancing are performed in parallel by setting fourth and fifth switching elements 44, 45 conductive. In the third operation mode, first switching element 41 may be non-conductive.

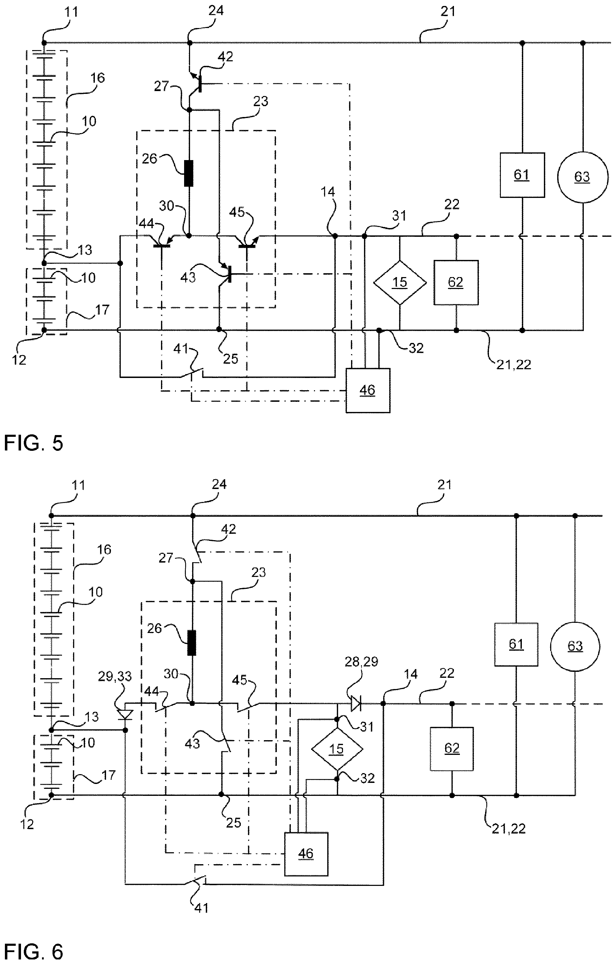

Figure 5 schematically illustrates a circuit diagram of a power supply system 100 according to a fourth embodiment of the present invention. A description thereof is omitted where it equals the power supply system 100 as illustrated in Figures 2 to 4. In Figure 5, the second to fifth switching elements 42 to 45 are specified to be transistor switches. Particularly, the second and third switching element 42, 43 are realized by a pair of complementary bipolar transistors, i.e. a NPN bipolar transistor and a PNP bipolar transistor. Further, the fourth and fifth switching elements 44, 45 are realized by a pair of complementary bipolar transistors, i.e. a PNP bipolar transistor and a NPN bipolar transistor. Hence, the conductivity states of the second to fifth switching elements 42 to 45 can be advantageously controlled with only two control signals output by the control unit 46. Further, according to Figure 5, the first and second voltage measurement nodes 31, 32 are disposed in the low voltage board net 22 instead of next to the terminals of the low voltage battery 15.

Figure 6 schematically illustrates a circuit diagram of a power supply system 100 according to an illustrative example not part of the invention. A description thereof is omitted where it equals the power supply system 100 as illustrated in Figures 2 to 5. In Figure 6, the first rectifying diode 28, 29 is interconnected between the low voltage node 14 and the second converter node 30. Further, the low voltage battery 15 is interconnected between the first rectifying diode 28, 29 and the second converter node 30. Thus, the power supply system of Figure 6 allows for a fourth operation mode, wherein charging of the low-voltage battery 15 via the step-down converter 23 can occur, while the low voltage board 22 net is operated by the second sub-stack 17 via the conductive first switching element 41. Thus, the low voltage board 22 net is operable via the second sub-stack 17 if the low voltage battery 15 is initially discharged, e.g. at a cold start, while the low voltage battery 15 is parallely charged for later use.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the claims.

### Reference signs

- 1: 48 V battery system
- 2: 12 V battery system
- 3: external DC/DC converter
- 4: voltage variable ECU
- 5: 48 V ECU
- 6: 12V ECU

- 10: battery cell
- 11: first stack node
- 12: second stack node
- 13: intermediate node
- 14: low voltage node
- 15: low voltage battery
- 16: first subset of stacked battery cells
- 17: second subset of stacked battery cells

- 21: high voltage board net
- 22: low voltage board net

- 23: step-down converter
- 24: first input node
- 25: second input node
- 26: inductance (choke)
- 28: (first) rectifying element
- 29: diode
- 30: second converter node
- 31: first voltage measurement node
- 32: second voltage measurement node
- 33: second rectifying element

- 41: first switching element
- 42: switching element
- 43: switching element
- 44: switching element
- 45: switching element
- 46: control unit
- 61: first load
- 62: second load
- 63: starter generator

## Claims

1. Power supply system (100) for an electric vehicle, comprising
a plurality of stacked battery cells (10) interconnected between a first stack node (11) and a second stack node (12) and configured to provide a first operation voltage for supplying a high voltage board net (21) of the electric vehicle;
a low voltage board net (22) of the electric vehicle including a low voltage battery (15) interconnected between the second stack node (12) and a low voltage node (14) and configured to output a second operation voltage for supplying the low voltage board net (22) of the electric vehicle;
a step-down converter (23) interconnected between the first stack node (11) and the second stack node (12) and configured to output a third operation voltage to the low voltage node (14); and
an intermediate node (13) dividing the plurality of stacked battery cells (10) in a first subset (16) of battery cells (10) and a second subset (17) of battery cells (10) and being connected to the low voltage node (14) via a first switching element (41); and
a control unit (46) configured to detect the terminal voltage of the low voltage battery (15) and to set the first switching element (41) either conductive or non-conductive depending on the detected terminal voltage, wherein the control unit (46) is configured to set the first switching element (41) conductive if the detected terminal voltage is less than a first predetermined voltage threshold and to set the first switching element (41) non-conductive if the detected terminal voltage is more than a second predetermined voltage threshold,
wherein the low voltage battery (15) is supplied by the second subset of battery cells (17) via the intermediate node (13) and the low voltage node (14) if the first switching element (41) is set conductive and by the step-down converter (23) via the low voltage node (14) if the first switching element (41) is set non-conductive.

2. Power supply system (100) according to claim 1, wherein the third operation voltage is less or equal than the second operation voltage and/or the second subset (17) of battery cells (10) provides a fourth operation voltage that is in between the second operation voltage and the third operation voltage.

3. Power supply system (100) according to claim 1, wherein the first predetermined voltage threshold is lower than at least one of the second to fourth operation voltage.

4. Power supply system (100) according to any one of the preceding claims,
wherein the step-down converter (23) comprises a first input node (24) connected to the first stack node (11) and a second input node (25) connected to the second stack node (12),
wherein a second switching element (42) and an energy storage element (26) are connected between the first input node (24) and the low voltage node (14),
wherein a third switching element (43) is interconnected between the second input node (25) and a first converter node (27) electrically connected between the second switching element (42) and the energy storage element (26).

5. Power supply system (100) according to claim 4, wherein the energy storage element (26) is an inductance or a capacitance.

6. Power supply system (100) according to claim 4 or 5, further comprising a rectifying element (28) interconnected between the low voltage node (14) and the step-down converter (23) and configured to suppress a current from the low voltage node (14) to the step-down converter (23).

7. Power supply system (100) according to claim 6, wherein the rectifying element (28) is a diode (29).

8. Power supply system (100) according to any one of the preceding claims, wherein the step-down converter (23) is further configured to output the third operation voltage to the intermediate node (13) for transferring energy from the first subset (16) of battery cells (10) to the second subset (17) of battery cells (10).

9. Power supply system (100) according to claim 8, wherein the step-down converter (23) comprises a second converter node (30) that is electrically connected between the low voltage node (14) and the energy storage element (26), a fourth switching element (44) electrically connected between the second converter node (30) and the intermediate node (13), and a fifth switching element (45) electrically connected between the second converter node (30) and the low voltage node (14).

10. Power supply system (100) according to claim 9, wherein the control unit (46) is further configured to control the conductivity of to the fourth switching element (44) and/or the fifth switching element (45) and/or wherein a second pair of complementary transistors is used for the fourth and fifth switching element (44,45).

11. Power supply system according to claim 10, wherein the control unit (46) is further configured to control the conductivity of the second switching element (42) and/or the third switching element (43) and/or wherein a first pair of complementary transistors is used for the second and third switching element (42,43).

12. Vehicle comprising a power supply system (100) according to any one of the claims 1 to 11, further comprising at least one first load (61) interconnected between the first stack node (11) and the second stack node (12) and at least one second load (62) interconnected between the second stack node (12) and the low voltage node (14).

13. Vehicle comprising a power supply system (100) according to any one of the claims 1 to 11, further comprising a starter generator (63) interconnected between the first stack node (11) and the second stack node (12).

14. Vehicle according to claim 12 or 13, wherein the first load (61) has an operation voltage of about 48 V and the second load (62) has an operation voltage of about 12 V.

## Patentansprüche

1. Stromversorgungssystem (100) für ein Elektrofahrzeug, das Folgendes umfasst
eine Vielzahl von gestapelten Batteriezellen (10), die zwischen einem ersten Stapelknoten (11) und einem zweiten Stapelknoten (12) miteinander verbunden und so konfiguriert sind, dass sie eine erste Betriebsspannung zur Versorgung eines Hochspannungs-Bordnetzes (21) des Elektrofahrzeugs bereitstellen;
ein Niederspannungs-Bordnetz (22) des Elektrofahrzeugs, das eine Niederspannungsbatterie (15) umfasst, die zwischen den zweiten Stapelknoten (12) und einen Niederspannungsknoten (14) geschaltet und so konfiguriert ist, dass sie eine zweite Betriebsspannung zur Versorgung des Niederspannungs-Bordnetzes (22) des Elektrofahrzeugs ausgibt;
einen Abwärtswandler (23), der zwischen dem ersten Stapelknoten (11) und dem zweiten Stapelknoten (12) angeschlossen ist und so konfiguriert ist, dass er eine dritte Betriebsspannung an den Niederspannungsknoten (14) ausgibt; und
einen Zwischenknoten (13), der die Vielzahl von gestapelten Batteriezellen (10) in eine erste Teilmenge (16) von Batteriezellen (10) und eine zweite Teilmenge (17) von Batteriezellen (10) unterteilt und über ein erstes Schaltelement (41) mit dem Niederspannungsknoten (14) verbunden ist; und
eine Steuereinheit (46), die so konfiguriert ist, dass sie die Klemmenspannung der Niederspannungsbatterie (15) erfasst und das erste Schaltelement (41) in Abhängigkeit von der erfassten Klemmenspannung entweder leitend oder nichtleitend einstellt, wobei die Steuereinheit (46) so konfiguriert ist, dass sie das erste Schaltelement (41) leitend einstellt, wenn die erfasste Klemmenspannung unter einem ersten vorgegebenen Spannungsschwellenwert liegt, und das erste Schaltelement (41) nichtleitend einstellt, wenn die erfasste Klemmenspannung über einem zweiten vorgegebenen Spannungsschwellenwert liegt,
wobei die Niederspannungsbatterie (15) von der zweiten Untergruppe von Batteriezellen (17) über den Zwischenknoten (13) und den Niederspannungsknoten (14) versorgt wird, wenn das erste Schaltelement (41) leitend eingestellt ist, und von dem Abwärtswandler (23) über den Niederspannungsknoten (14), wenn das erste Schaltelement (41) nichtleitend eingestellt ist.

2. Stromversorgungssystem (100) nach Anspruch 1, wobei die dritte Betriebsspannung kleiner oder gleich der zweiten Betriebsspannung ist und/oder die zweite Untergruppe (17) von Batteriezellen (10) eine vierte Betriebsspannung liefert, die zwischen der zweiten Betriebsspannung und der dritten Betriebsspannung liegt.

3. Stromversorgungssystem (100) nach Anspruch 1, wobei die erste vorbestimmte Spannungsschwelle niedriger ist als mindestens eine der zweiten bis vierten Betriebsspannung.

4. Stromversorgungssystem (100) nach einem der vorhergehenden Ansprüche,
wobei der Abwärtswandler (23) einen ersten Eingangsknoten (24) umfasst, der mit dem ersten Stapelknoten (11) verbunden ist, und einen zweiten Eingangsknoten (25), der mit dem zweiten Stapelknoten (12) verbunden ist,
wobei ein zweites Schaltelement (42) und ein Energiespeicherelement (26) zwischen dem ersten Eingangsknoten (24) und dem Niederspannungsknoten (14) angeschlossen sind,
wobei ein drittes Schaltelement (43) zwischen den zweiten Eingangsknoten (25) und einen ersten Wandlerknoten (27) geschaltet ist, der elektrisch zwischen dem zweiten Schaltelement (42) und dem Energiespeicherelement (26) liegt.

5. Stromversorgungssystem (100) nach Anspruch 4, wobei das Energiespeicherelement (26) eine Induktivität oder eine Kapazität ist.

6. Stromversorgungssystem (100) nach Anspruch 4 oder 5, das ferner ein Gleichrichterelement (28) umfasst, das zwischen den Niederspannungsknoten (14) und den Abwärtswandler (23) geschaltet und so konfiguriert ist, dass es einen Strom von dem Niederspannungsknoten (14) zu dem Abwärtswandler (23) unterdrückt.

7. Stromversorgungssystem (100) nach Anspruch 6, wobei das Gleichrichterelement (28) eine Diode (29) ist.

8. Stromversorgungssystem (100) nach einem der vorhergehenden Ansprüche, wobei der Abwärtswandler (23) ferner so konfiguriert ist, dass er die dritte Betriebsspannung an den Zwischenknoten (13) ausgibt, um Energie von der ersten Untergruppe (16) von Batteriezellen (10) an die zweite Untergruppe (17) von Batteriezellen (10) zu übertragen.

9. Stromversorgungssystem (100) nach Anspruch 8, wobei der Abwärtswandler (23) einen zweiten Wandlerknoten (30), der elektrisch zwischen dem Niederspannungsknoten (14) und dem Energiespeicherelement (26) angeschlossen ist, ein viertes Schaltelement (44), das elektrisch zwischen dem zweiten Wandlerknoten (30) und dem Zwischenknoten (13) angeschlossen ist, und ein fünftes Schaltelement (45), das elektrisch zwischen dem zweiten Wandlerknoten (30) und dem Niederspannungsknoten (14) angeschlossen ist, umfasst.

10. Stromversorgungssystem (100) nach Anspruch 9, wobei die Steuereinheit (46) ferner so konfiguriert ist, dass sie die Leitfähigkeit des vierten Schaltelements (44) und/oder des fünften Schaltelements (45) steuert und/oder wobei ein zweites Paar komplementärer Transistoren für das vierte und fünfte Schaltelement (44, 45) verwendet wird.

11. Stromversorgungssystem nach Anspruch 10, wobei die Steuereinheit (46) ferner so konfiguriert ist, dass sie die Leitfähigkeit des zweiten Schaltelements (42) und/oder des dritten Schaltelements (43) steuert und/oder wobei ein erstes Paar komplementärer Transistoren für das zweite und dritte Schaltelement (42, 43) verwendet wird.

12. Fahrzeug mit einem Stromversorgungssystem (100) nach einem der Ansprüche 1 bis 11, ferner mit mindestens einer ersten Last (61), die zwischen dem ersten Stapelknoten (11) und dem zweiten Stapelknoten (12) angeschlossen ist, und mindestens einer zweiten Last (62), die zwischen dem zweiten Stapelknoten (12) und dem Niederspannungsknoten (14) angeschlossen ist.

13. Fahrzeug mit einem Stromversorgungssystem (100) nach einem der Ansprüche 1 bis 11, das ferner einen Startergenerator (63) umfasst, der zwischen dem ersten Stapelknoten (11) und dem zweiten Stapelknoten (12) geschaltet ist.

14. Fahrzeug nach Anspruch 12 oder 13, wobei die erste Last (61) eine Betriebsspannung von etwa 48 V und die zweite Last (62) eine Betriebsspannung von etwa 12 V aufweist.

## Revendications

1. Système d'alimentation électrique (100) pour un véhicule électrique, comprenant
une pluralité d'éléments de batterie (10) empilés interconnectés entre un premier noeud de pile (11) et un deuxième noeud de pile (12) et configurés pour fournir une première tension de fonctionnement pour alimenter un réseau de carte haute tension (21) du véhicule électrique ;
un réseau de carte basse tension (22) du véhicule électrique comportant
une batterie basse tension (15) interconnectée entre le deuxième noeud de pile (12) et un noeud basse tension (14) et configurée pour délivrer en sortie une deuxième tension de fonctionnement pour alimenter le réseau de carte basse tension (22) du véhicule électrique ;
un convertisseur abaisseur (23) interconnecté entre le premier noeud de pile (11) et le deuxième noeud de pile (12) et configuré pour délivrer en sortie une troisième tension de fonctionnement au noeud basse tension (14) ; et
un noeud intermédiaire (13) divisant la pluralité d'éléments de batterie (10) empilés en un premier sous-ensemble (16) d'éléments de batterie (10) et un deuxième sous-ensemble (17) d'éléments de batterie (10) et étant connecté au noeud basse tension (14) via un premier élément de commutation (41) ; et
une unité de commande (46) configurée pour détecter la tension aux bornes de la batterie basse tension (15) et pour rendre le premier élément de commutation (41) soit conducteur soit non conducteur en fonction de la tension aux bornes détectée, l'unité de commande (46) étant configurée pour rendre le premier élément de commutation (41) conducteur si la tension aux bornes détectée est inférieure à un premier seuil de tension prédéterminé et pour rendre le premier élément de commutation (41) non conducteur si la tension aux bornes détectée est supérieure à un deuxième seuil de tension prédéterminé,
dans lequel la batterie basse tension (15) est alimentée par le deuxième sous-ensemble d'éléments de batterie (17) via le noeud intermédiaire (13) et le noeud basse tension (14) si le premier élément de commutation (41) est rendu conducteur, et par le convertisseur abaisseur (23) via le noeud basse tension (14) si le premier élément de commutation (41) est rendu non conducteur.

2. Système d'alimentation électrique (100) selon la revendication 1, dans lequel la troisième tension de fonctionnement est inférieure ou égale à la deuxième tension de fonctionnement et/ou le deuxième sous-ensemble (17) d'éléments de batterie (10) fournit une quatrième tension de fonctionnement qui est entre la deuxième tension de fonctionnement et la troisième tension de fonctionnement.

3. Système d'alimentation électrique (100) selon la revendication 1, dans lequel le premier seuil de tension prédéterminé est inférieur à au moins une des deuxième à quatrième tensions de fonctionnement.

4. Système d'alimentation électrique (100) selon l'une quelconque des revendications précédentes,
dans lequel le convertisseur abaisseur (23) comprend un premier noeud d'entrée (24) connecté au premier noeud de pile (11) et un deuxième noeud d'entrée (25) connecté au deuxième noeud de pile (12),
dans lequel un deuxième élément de commutation (42) et un élément de stockage d'énergie (26) sont connectés entre le premier noeud d'entrée (24) et le noeud basse tension (14),
dans lequel un troisième élément de commutation (43) est interconnecté entre le deuxième noeud d'entrée (25) et un premier noeud de convertisseur (27) connecté électriquement entre le deuxième élément de commutation (42) et l'élément de stockage d'énergie (26).

5. Système d'alimentation électrique (100) selon la revendication 4, dans lequel l'élément de stockage d'énergie (26) est une inductance ou une capacité.

6. Système d'alimentation électrique (100) selon la revendication 4 ou 5, comprenant en outre un élément redresseur (28) interconnecté entre le noeud basse tension (14) et le convertisseur abaisseur (23) et configuré pour supprimer un courant allant du noeud basse tension (14) au convertisseur abaisseur (23).

7. Système d'alimentation électrique (100) selon la revendication 6, dans lequel l'élément redresseur (28) est une diode (29).

8. Système d'alimentation électrique (100) selon l'une quelconque des revendications précédentes, dans lequel le convertisseur abaisseur (23) est en outre configuré pour délivrer en sortie la troisième tension de fonctionnement au noeud intermédiaire (13) pour transférer de l'énergie du premier sous-ensemble (16) d'éléments de batterie (10) au deuxième sous-ensemble (17) d'éléments de batterie (10).

9. Système d'alimentation électrique (100) selon la revendication 8, dans lequel le convertisseur abaisseur (23) comprend un deuxième noeud de convertisseur (30) qui est connecté électriquement entre le noeud basse tension (14) et l'élément de stockage d'énergie (26), un quatrième élément de commutation (44) connecté électriquement entre le deuxième noeud de convertisseur (30) et le noeud intermédiaire (13), et un cinquième élément de commutation (45) connecté électriquement entre le deuxième noeud de convertisseur (30) et le noeud basse tension (14).

10. Système d'alimentation électrique (100) selon la revendication 9, dans lequel l'unité de commande (46) est en outre configurée pour commander la conductivité du quatrième élément de commutation (44) et/ou du cinquième élément de commutation (45) et/ou dans lequel une deuxième paire de transistors complémentaires est utilisée pour les quatrième et cinquième éléments de commutation (44, 45).

11. Système d'alimentation électrique selon la revendication 10, dans lequel l'unité de commande (46) est en outre configurée pour commander la conductivité du deuxième élément de commutation (42) et/ou du troisième élément de commutation (43) et/ou dans lequel une première paire de transistors complémentaires est utilisée pour les deuxième et troisième éléments de commutation (42, 43).

12. Véhicule comprenant un système d'alimentation électrique (100) selon l'une quelconque des revendications 1 à 11, comprenant en outre au moins une première charge (61) interconnectée entre le premier noeud de pile (11) et le deuxième noeud de pile (12) et au moins une deuxième charge (62) interconnectée entre le deuxième noeud de pile (12) et le noeud basse tension (14).

13. Véhicule comprenant un système d'alimentation électrique (100) selon l'une quelconque des revendications 1 à 11, comprenant en outre un générateur de démarrage (63) interconnecté entre le premier noeud de pile (11) et le deuxième noeud de pile (12).

14. Véhicule selon la revendication 12 ou 13, dans lequel la première charge (61) a une tension de fonctionnement d'environ 48 V et la deuxième charge (62) a une tension de fonctionnement d'environ 12 V.
